# EUROPEAN PATENT SPECIFICATION

(11) **EP 1 702 381 B1**
(45) Date of publication and mention of the grant of the patent: **09.06.2010**
(21) Application number: 04793664.6
(22) Date of filing: 19.10.2004
(51) Int. Cl.: H01M 8/16

(54) **SUSPENSION FOR THE GENERATION OF A CURRENT OF ELECTRONS AND THE USE AND THE PREPARATION THEREOF**
SUSPENSION ZUR ERZEUGUNG EINES STROMS VON ELEKTRONEN SOWIE DEREN VERWENDUNG UND PRÄPARATION
SUSPENSION POUR LA GENERATION D'UN COURANT D'ELECTRONS, ET UTILISATION ET ELABORATION DE CETTE SUSPENSION

(30) Priority: 20.10.2003 NL 1024573
(43) Date of publication of application: 20.09.2006
(73) Proprietor: Janssen, Catharina P., 6584 AA Molenhoek (NL)
(72) Inventor: Janssen, Catharina P., 6584 AA Molenhoek (NL)
(74) Representative: van Kooij, Adriaan
(86) International application number: PCT/NL2004/000739
(87) International publication number: WO 2005/038968

(56) References cited:
- WO-A-03/050896
- WO-A-2004/051774
- GB-A- 1 297 221
- US-A- 4 622 294
- US-A- 6 022 500

## Description

### FIELD OF THE INVENTION

The present invention relates to a suspension that can be used to generate a current of electrons, the use of the suspension for the production of a battery or more specifically of a nano-battery for the use in combination with a microchip. The present invention furthermore relates to a battery using the suspension, a fuel cell comprising: an anode compartment including an anode; a cathode compartment including a cathode; and disposed within said anode compartment, within said cathode compartment, or between said anode compartment and said cathode compartment, the suspension, a device for detection of a solute using the suspension, more specifically a device for the detection of glucose, a method of producing electrical power comprising the use of the suspension, and a method for preparing the suspension.

### BACKGROUND OF THE INVENTION

Known systems for generating energy use enzymes that are embedded in a biocompatible membrane, which enzymes can generate electrons which can be utilized for the generation of electrical energy (WO 03050896). The membrane required for such an approach must be biocompatible to ensure activity of the membrane proteins. The membrane can not be permeable for many solutes because the enzymes are not active in this situation. The above requirements limits the choice of membranes and vesicles and only membrane proteins can be used in this system.

### SUMMARY OF THE INVENTION

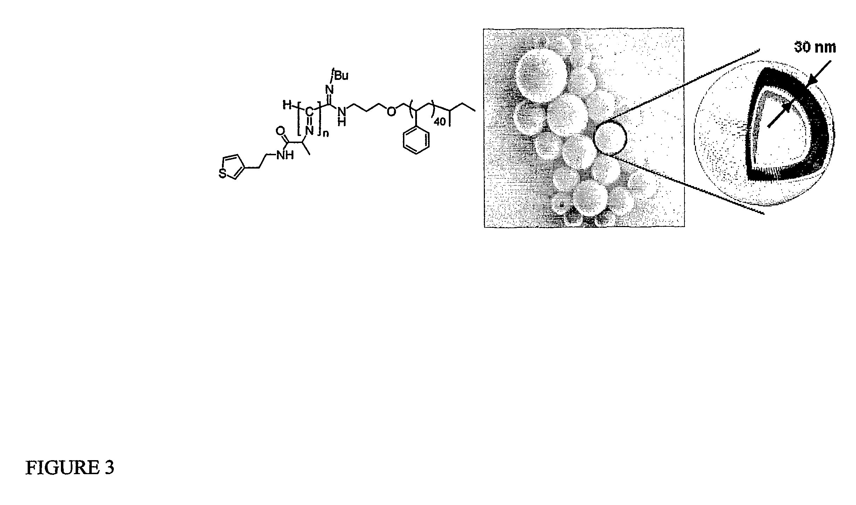

The present invention relates to a suspension that can be used to generate a current of electrons, which suspension comprises a polypeptide, **characterized in that** the polypeptide is entrapped in a hollow particle. Because the polypeptide is entrapped and not embedded in the shell of the hollow particle, the hollow particle could have a shell that has unique properties, such as selective permeability, robustness and conductivity. The polypeptide can be any polypeptide that is active in an aqueous solution. The suspension preferably contains more hollow particles, in which preferably more than one polypeptide is entrapped. Preferably the density of the hollow particles in the suspension is such that the majority of the hollow particles is in close contact to each other for a more efficient generation of current of electrons. The hollow particle holds the polypeptide in a certain distribution within the suspension so the activity of the polypeptide is also well distributed and will stay well distributed. Preferably the hollow particle is not permeable to the polypeptide. In a preferred aspect, the invention relates to a hollow particle that is a vesicle. A vesicle is a particular hollow particle that is composed of amphiphilic molecules that form the outer shell. Vesicles that entrap a polypeptide can be prepared by adding the molecules to the polypeptide. In another aspect of the present invention the hollow particle is a polymersome. A polymersome is a vesicle that is constructed from polymeric amphiphilic building blocks and can have unique properties such as rigidity and the ability to conduct electrons. In another aspect of the present invention the shell of the hollow particle is conductive. Because of the conductivity the electrons generated within the hollow sphere are transported via the conducting outer shells of the hollow particles and can be transported to the anode. Preferably there is no accumulation of electrons inside the hollow particles and transport of electrons is proceeding via the outer shell. In another aspect of the present invention the hollow particle is composed of conductive polymer. Specific types of polymers can easily conduct electrons and are readily synthesized. In another aspect of the present invention the hollow particle is composed of a block-copolymer. This polymer readily forms vesicles and forms a conductive outer shell. In another aspect of the present invention the hollow particle is composed of a rigid helical polyisocyanide head group and a flexible polystyrene tail, preferably polystyrene-*b*-poly(L-isocyanoalanine(2-thiophen-3-yl-ethyl)amide) (PS-PIAT). PS-PIAT is able to form very stable and well-defined polymersomes in water (Figure 3). The vesicles, which are formed upon dispersal of the macromolecules described above in an aqueous solution, are very robust, but still permeable for a substrate like glucose. This amphiphilic macromolecule is a rod-coil type of block copolymer. The membrane thickness of 30±10 nm was determined by scanning electron micrograph (SEM). In another aspect of the present invention the thiophene side groups present in the side chain of PS-PIAT are polymerized, thereby providing the vesicles with a more conducting polymer outer and inner shell. This can be performed electrochemically or by chemical oxidation. This polymerization results in cross-linking of the polymersome membrane. Studies have shown that the electron conducting properties of the PS-PIAT polymersomes improve after cross-linking. It has already been demonstrated that a variety of enzymes can be successfully incorporated within the aqueous inner compartment of the vesicles composed of PS-PIAT, and that after polymerization of the vesicle shells the enzymes can no longer leak out and are protected from protease degradation. Catalysis experiments with other enzymes have confirmed that the enzymatic activity of the included species is retained due to protection of the polypeptide from proteases by the vesicle membrane.

In yet another aspect of the present invention the polypeptide is capable of participating in a chemical reaction or is capable in participating in the formation of a molecular structure that facilitate such reaction. The chemical reaction can result in release of electrons that can be transported through the shell of the hollow particle, preferably through the conductive outer shell of vesicles. Such a polypeptide could potentially be a genetically modified polypeptide that is very stable for a long time. The polypeptide could be linked to the inner side of the vesicle by for example a lipophylic tail attached to the enzyme. The polypeptide preferably is an enzyme and in a preferred embodiment of the present invention the hollow particle is permeable to a substrate of the enzyme. There are many enzymes known that catalyze a chemical reaction that release electron(s). Those enzymes can be used in a suspension according to the present invention. The chemical reaction preferably is a redox reaction. With redox reaction electrons are released and can diffuse to the shell of the hollow particle and can be transported through the shells in a specific direction. More preferred is that the chemical reaction is an oxidation. Many enzymes in nature catalyze an oxidation reaction and the substrates for those enzymes are molecules that are easily available and relatively cheap. In a preferred embodiment the polypeptide is a glucose oxidase. In this embodiment the chemical reaction is the conversion of β-D-glucose into D-glucono-1,5-lactone. During this reaction two electrons are released, see below.

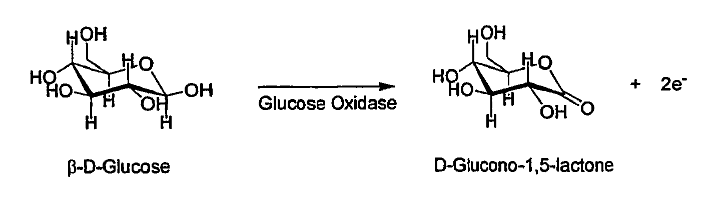

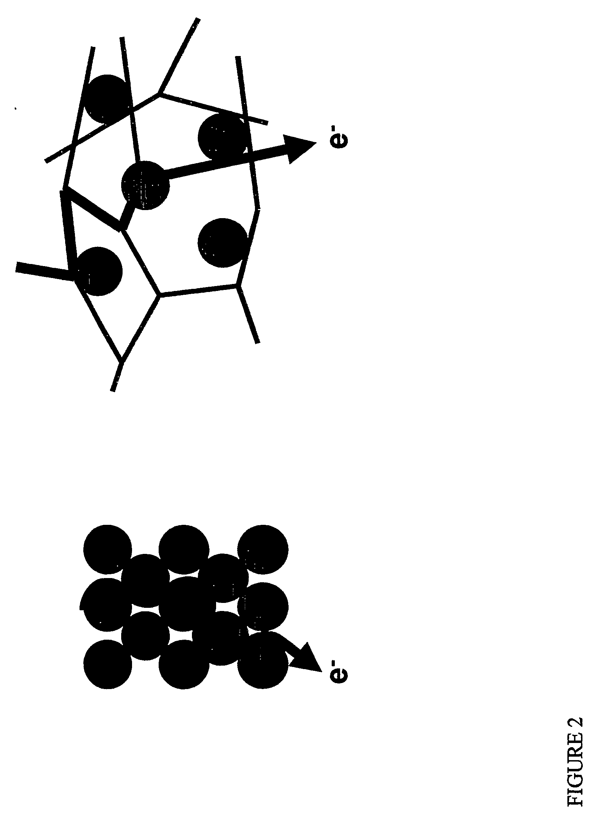

The electrons that are liberated can be easily accepted by the conductive shell of the hollow particles, which also serve as organic electrodes. Glucose oxidase is relatively stable and a well known enzyme. In another preferred aspect, the invention relates to a suspension wherein the hollow particle is embedded in a gel-like structure. In a gel-like structure the hollow particles diffuse slowly and the substrate diffuses slowly. Preferably the hollow particle is embedded in a glucose solution. Glucose is a good substrate for glucose oxidase and not expensive. In this respect of the invention glucose is the fuel from which electrons will be produced and is readily available and a relatively cheap. The combination glucose/glucose oxidase is a good and often used combination of enzyme/substrate. Glucose furthermore is stable and is obtainable in a very pure form. The electrons can find their path via the conductive outer shell(s) of the hollow particles, on the condition that the majority of the hollow particles contact each other (Figure 2). If this electronic communication is less efficient, a preferred embodiment of the invention comprises a matrix to contact at least one hollow particle for carrying out the electron transport, for example a conducting polymer (e.g. a polythiophene) that contacts the vesicles (Figure 2). In another aspect of the present invention the matrix can cross-link at least one hollow particle to another hollow particle. The matrix can for example be partially embedded in the shell of some of the hollow particles. The suspension contains in a preferred embodiment known electron carriers such as ferrocene derivatives and viologen derivatives in order to facilitate electron transport.

The present invention also relates to the use of the suspension described above for the production of a battery. Preferably the suspension described above is used for the production of a nano-battery for the use in combination with a microchip.

The present invention furthermore relates to a battery using the suspension described above. Such a battery can use relatively cheap fuel, like glucose, and can deliver a constant current. Since it can be chosen that the components of such a battery are not toxic it is saver for use in for example a pace maker in humans. No known toxic compounds (except for the viologen derivatives) are included so there is no toxicity risk involved. In addition such a battery is not harmful for the environment.

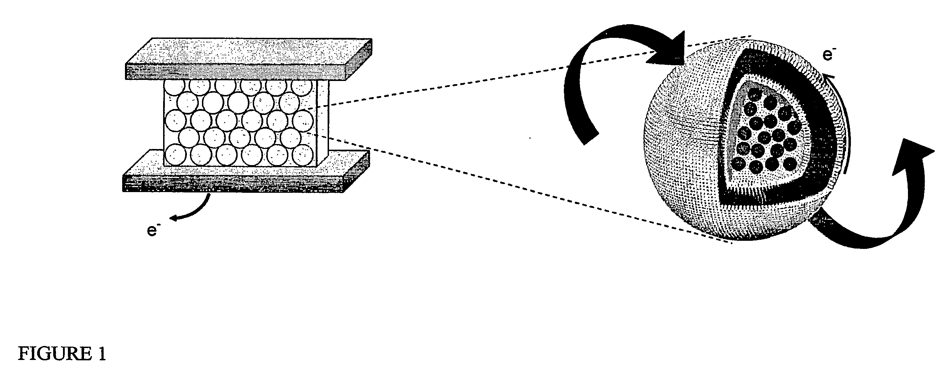

The present invention furthermore relates to a fuel cell comprising: an anode compartment including an anode; a cathode compartment including a cathode; and disposed within said anode compartment, within said cathode compartment, or between said anode compartment and said cathode compartment, the suspension described above. The electrons can find their path in the direction of the anode via the conductive outer shell of the hollow particle(s). See figure 1.

The present invention also relates to a device for detection of a solute using the suspension described above. The suspension preferably comprises an enzyme that can chemically convert the solute. Preferably with these conversion electrons are released. A specific embodiment of the present invention in this respect relates to a glucose sensor using the suspension described above. Preferably the polypeptide in this embodiment is a glucose oxidase. When glucose is sensed the glucose oxidase uses the glucose as a substrate and electrons are released. The electrons move via the outer shells of the hollow particles to an anode and a current of electrons can be detected. In another aspect the present invention relates to a method of producing electrical power comprising the use of the suspension described above. Because of the natural source of energy this kind of electrical power is not harmful for the environment. The electrical power can for example be used for cars. The present invention furthermore relates to the process for preparing the suspension described above, comprising the steps of: (a) making an aqueous solution of bis(2,2'-bipyridine)ruthenium(II)bis(pyrazolyl); (b) injecting a solution containing polystyrene-*b-*poly(L-isocyanoalanine(2-thiophen-3-yl-ethyl)amide) in THF into the solution made in step (a). See example 1 for more details. Preferably the process furthermore comprises: (c) placing the dispersion made in step (b) at 60 °C; (d) cooling the dispersion to room temperature, and (e) filter dispersion of step (d) using a filter with a cutoff of 100 kDa. See example 1 for more details.

### BRIEF DESCRIPTION OF THE DRAWINGS

Figure 1 shows a schematic picture of a designed battery. The plates are representations of electrodes of which the upper is the cathode and the plate below is the anode. The hollow particles are represented as circles of which one is enlarged at the right of the picture. The large arrows indicate the flow of respectively glucose (left arrow) and gluconolactone (right arrow), which is respectively the substrate and the product of the enzyme glucose oxidase which is indicated as circles entrapped in the hollow particle. The shell of the particle is shown as a shell composed of amphiphilic molecules. The small arrow indicates the flow of electrons.
Figure 2 is a schematic representation of two different ways of electron transport pathways. (a) Hollow particles contact each other and create an electronic pathway via their conductive outer shells. (b) Vesicles are entrapped in a matrix of a conductive polymer which transports the electrons.
Figure 3. Left: structure formula of PS-PIAT, middle: scanning electron micrograph of PS-PIAT polymersomes formed in an aqueous solution, right: schematic representation of a polymersome, indicating the membrane thickness of 30 nm.
Figure 4. TEM micrograph of the aggregates formed by the compartmentalization of GOx within PS-PIAT polymersomes.
Figure 5. Chemical structure of the block-copolymer of polystyrene and thiophene-functionalized polyisocyanopeptide and the micrometer-sized vesicles are formed upon dispersal of the macromolecule in water.

### DETAILED DESCRIPTION OF THE INVENTION

### Example 1

### 1. Entrapment of the glucose oxidase.

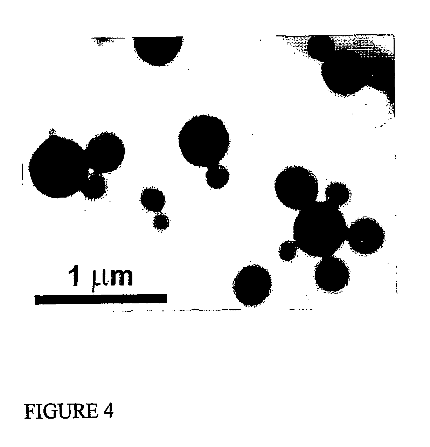

Encapsulation of the GOx enzymes was carried out by preparing a solution of 48 mg.l⁻¹ GOx dissolved in phosphate buffer (20 mM, pH 7.0). Into this solution a 1.0 mg.ml⁻¹ solution of PS-PIAT in THF was injected resulting in a final buffer to THF ratio of 6:1 (v/v). The free enzyme was removed by size exclusion chromatography using Sephadex G-50 and an aqueous phosphate buffer (pH 7.5) as eluent. TEM micrographs of the resulting aggregates are shown in Figure 4.

### 2. Cross-linking of the polymersome membrane

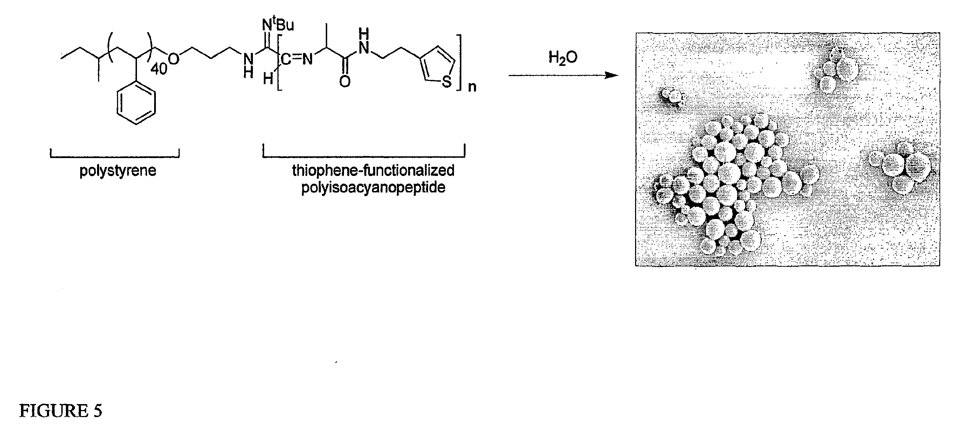

Cross-linking of the PS-PIAT polymersome membrane was done by making an aqueous solution of 0.20 ml of 30 mg.l⁻¹ CAL B and 1.0 ml of 1.3 µM BRP in which 0.10 ml of a solution containing 0.50 g.l⁻¹ PS-PIAT in THF was injected, resulting in a final water/THF ratio of 12:1 (v/v). A concentration of BRP was chosen that was comparable to the amount of thiophene groups present (2×10⁻⁷ M). Subsequently, the dispersion was placed in a water bath of 60 °C for the desired period of time. After cooling to room temperature 0.50 ml of the dispersion was transferred to an eppendorf having a filter unit with a cutoff of 100 kDa. The dispersion was centrifuged to dryness after which 0.50 ml of pure water was added and the dispersion was centrifuged again to dryness. After repeating this step a second time, 0.50 ml of water was added to redisperse the cross-linked aggregates. See also figure 5.

### 3. Reaction chamber

A confined reaction chamber of about 1-2 cm³ is filled with a water-based dispersion of the Glucose Oxidase-containing vesicles. The 'fuel' glucose can be dissolved in this dispersion up to relatively high concentrations. On the top and the bottom of the reaction chamber, two electrodes are attached (constructed of e.g. Indium Tin Oxide (ITO)). Upon the application of a voltage, electrons generated in the battery can be transported to an external capacitor from which a constant current can be liberated to the device that has to be supported.

### 4. Prediction of performance

For the desired nano-battery an *average* electric current of approximately 200 mA is required, which means that 1.25 × 10¹⁸ electrons are needed per second. The following calculations have been made assuming a maximum performance of a cell of 1 cm³. The required electric current corresponds to 6.25 × 10¹⁷ enzymatic reactions per second. Taking into account the reported turnover number of Glucose Oxidase (22,800/s), this means that 2.7 × 10¹³ enzymes are needed (corresponding to about 4 micrograms). Simultaneously, 2.7 × 10¹³ molecules of glucose are converted per second (corresponding to about 8 nanograms). Assuming that about 5000 enzymes of Glucose Oxidase are included in one vesicle (an assumption based on other vesicle-enzyme systems), 5.4 × 10⁹ vesicles are needed, which have an average diameter of 1 micrometer. If a compartment of 1 cm³ is filled with a solution or gel containing 20 volume % of vesicles, this means that 2 × 10¹³ vesicles are present, a 3700-fold excess of the required amount. This means that the maximum performance of such a system results in the generation of an electric current of 740 A. At the average operating current of 200 mA, and assuming an amount of glucose 'fuel' of 250 mg per cm³, the battery can operate continuously for a period of about 8700 hours (1 year). At this point the performance-limiting factor is the amount of glucose present and the build up of side products glucoselactone and protons. The system will, however, be subject to other factors that can affect its performance. One can think about enzyme degradation, in particular when the system is operating for a longer time. In addition, an important factor determining performance will be the efficiency of electron transport from the battery to the anode. Several of the parameters of the battery can however be easily varied (e.g. the amounts of vesicles or glucose, the nature of the matrix).

## Claims

1. Suspension that can be used to generate a current of electrons, which suspension comprises a plurality of hollow particles in electrically conductive contact, said hollow particles comprise a substrate permeable and electrically conductive outer shell and entrapped therein a redox-reaction catalyzing enzyme catalyzing an enzymatic conversion of said substrate in said hollow particles thereby liberating electrons.

2. Suspension according to claim 1, wherein the substrate permeable and electrically conductive outer shell is composed of a polymer.

3. Suspension according to claim 2, wherein the polymer is a block-copolymer.

4. Suspension according to claim 3, wherein the block-copolymer comprises a hydrophobic polystyrene block and a hydrophilic polyisocyanopeptide.

5. Suspension according to claim 3 or claim 4, wherein the block-copolymer comprises polystyrene-b-poly (L-isocyanoalanine (2-thiophen-3-yl-ethyl) amide)(PS-PIAT).

6. Suspension according to claim 5, wherein side groups present on the block-copolymer are polymerized.

7. Suspension according to claim 6, wherein the thiophene side groups present in the side chain of polystyrene-b-poly (L-isocyanoalanine (2-thiophen-3-yl-ethyl) amide) are polymerized.

8. Suspension according to any of claims 1 to 7, wherein the polypeptide is linked to the inner side of the hollow particle.

9. Suspension according to any of the claims 1 to 8, wherein the enzyme is glucose oxidase and the substrate is glucose.

10. Suspension according to any of the claims 1 to 9, wherein the hollow particles are embedded in an electrically conductive matrix.

11. Suspension according to claim 10, wherein the electrically conductive matrix comprises ferrocen derivatives and/or viologen derivatives.

12. Use of a suspension according to any of claims 1-11 for the production of a battery.

13. Fuel cell comprising: an anode compartment including an anode; a cathode compartment including a cathode ; and disposed within said anode compartment, within said cathode compartment, or between said anode compartment and said cathode compartment, the suspension according to any of the claims 1-11.

14. Device for detection of a substrate using a suspension according to any of the claims 1 to 11.

15. Method of producing electrical power, comprising the use of the suspension according to any of claims 1-11.

16. Method for preparing a suspension according to any of claims 1-11, comprising the steps of:
(a) making an aqueous solution of bis (2,2'-bipyridine)ruthenium (II) bis (pyrazolyl);
(b) injecting a solution containing polystyrene-b-poly (L-isocyanoalanine (2-thiophen-3-yl-ethyl) amide) in THF into the solution made in step (a).

17. Method according to claim 16, further comprising:
(c) placing the dispersion made in step (b) at 60°C;
(d) cooling the dispersion to room temperature; and
(e) filter the dispersion of step (d) using a filter with a cutoff of 100 kDa.

## Patentansprüche

1. Suspension, die zur Erzeugung eines Elektronenstroms verwendet werden kann, wobei die Suspension eine Vielzahl von hohlen Partikeln in elektrisch leitendem Kontakt umfasst, wobei die hohlen Partikel eine Substratdurchlässige und elektrisch leitende äußere Schale und darin eingeschlossen ein Redoxreaktion-katalysierendes Enzym umfassen, das in den hohlen Partikeln eine enzymatische Umsetzung des besagten Substrates katalysiert, wobei Elektronen freigesetzt werden.

2. Suspension gemäß Anspruch 1, wobei die Substratdurchlässige und elektrisch leitende äußere Schale aus einem Polymer zusammengesetzt ist.

3. Suspension gemäß Anspruch 2, wobei das Polymer ein Block-Copolymer ist.

4. Suspension gemäß Anspruch 3, wobei das Block-Copolymer einen hydrophoben Polystyrolblock und ein hydrophiles Polyisocyanopeptid umfasst.

5. Suspension gemäß Anspruch 3 oder Anspruch 4, wobei das Block-Copolymer Polystyrol-b-poly (L-isocyanoalanin (2-thiophen-3-yl-ethyl) amid) (PS-PIAT) umfasst.

6. Suspension gemäß Anspruch 5, wobei Seitengruppen, die sich auf dem Block-Copolymer befinden, polymerisiert sind.

7. Suspension gemäß Anspruch 6, wobei die Thiophen-Seitengruppen, die sich in den Seitenketten des Polystyrol-b-poly (L-isocyanoalanin (2-thiophen-3-yl-ethyl) amid) befinden, polymerisiert sind.

8. Suspension gemäß einem der Ansprüche 1 bis 7, wobei das Polypeptid mit der Innenseite des hohlen Partikels in Verbindung steht.

9. Suspension gemäß einem der Ansprüche 1 bis 8, wobei das Enzym Glucose-Oxidase und das Substrat Glucose ist.

10. Suspension gemäß einem der Ansprüche 1 bis 9, wobei die hohlen Partikel in einer elektrisch leitenden Matrix eingebettet sind.

11. Suspension gemäß Anspruch 10, wobei die elektrisch leitende Matrix Ferrocen-Derivate und/oder Viologen-Derivate umfasst.

12. Verwendung einer Suspension gemäß einem der Ansprüche 1-11 zur Herstellung einer Batterie.

13. Brennstoffzelle, umfassend: ein Anoden-Kompartiment, umfassend eine Anode; ein Kathoden-Kompartiment, umfassend eine Kathode; und innerhalb dieses Anoden-Kompartiments, innerhalb dieses Kathoden-Kompartiments, oder zwischen diesem Anoden-Kompartiment und diesem Kathoden-Kompartiment verteilt, die Suspension gemäß einem der Ansprüche 1-11.

14. Vorrichtung zum Detektieren eines Substrates unter Verwendung einer Suspension gemäß einem der Ansprüche 1 bis 11.

15. Verfahren zur Erzeugung von elektrischer Leistung, umfassend die Verwendung der Suspension gemäß einem der Ansprüche 1-11.

16. Verfahren zur Herstellung einer Suspension gemäß einem der Ansprüche 1-11, umfassend die Schritte:
(a) Herstellen einer wässrigen Lösung von Bis (2,2'-bipyridin) ruthenium (II) bis (pyrazolyl);
(b) Einspritzen einer Lösung enthaltend Polystyrol-b-poly (L-isocyanoalanin (2-thiophen-3-yl-ethyl) amid) in THF in die in Schritt (a) hergestellten Lösung.

17. Verfahren gemäß Anspruch 16, ferner umfassend:
(c) Bringen der in Schritt (b) hergestellten Lösung auf 60°C;
(d) Abkühlen der Dispersion auf Raumtemperatur; und
(e) Filtrieren der Dispersion von Schritt (d) unter Verwendung eines Filters mit einem Cut-off von 100 kDa.

## Revendications

1. Suspension utilisable pour générer un courant d'électrons, laquelle suspension comprend une pluralité de particules creuses en contact électriquement conducteur, lesdites particules creuses comprenant une gaine extérieure électriquement conductrice et perméable à un substrat et, piégée dans celles-ci, une enzyme catalysant une réaction redox qui catalyse une conversion enzymatique dudit substrat dans lesdites particules creuses en libérant ainsi des électrons.

2. Suspension selon la revendication 1, dans laquelle la gaine extérieure électriquement conductrice et perméable à un substrat est composée d'un polymère.

3. Suspension selon la revendication 2, dans laquelle le polymère est un copolymère séquencé.

4. Suspension selon la revendication 3, dans laquelle le copolymère séquencé comprend un bloc de polystyrène hydrophobe et un polyisocyanopeptide hydrophile.

5. Suspension selon la revendication 3 ou la revendication 4, dans laquelle le copolymère séquencé comprend du polystyrène-b-poly(L-isocyanoalanine (2-thiophén-3-yl-éthyl) amide) (PS-PIAT).

6. Suspension selon la revendication 5, dans laquelle les groupes latéraux présents sur le copolymère séquencé sont polymérisés.

7. Suspension selon la revendication 6, dans laquelle les groupes latéraux thiophène présents dans la chaîne latérale de polystyrène-b-poly(L-isocyanoalanine (2-thiophén-3-yl-éthyl) amide) sont polymérisés.

8. Suspension selon l'une quelconque des revendications 1 à 7, dans laquelle le polypeptide est lié au côté intérieur de la particule creuse.

9. Suspension selon l'une quelconque des revendications 1 à 8, dans laquelle l'enzyme est la glucose oxydase et le substrat est le glucose.

10. Suspension selon l'une quelconque des revendications 1 à 9, dans laquelle les particules creuses sont encastrées dans une matrice électriquement conductrice.

11. Suspension selon la revendication 10, dans laquelle la matrice électriquement conductrice comprend des dérivés de ferrocène et/ou des dérivés de viologène.

12. Utilisation d'une suspension selon l'une quelconque des revendications 1 à 11 pour la production d'une batterie.

13. Pile à combustible comprenant : un compartiment d'anode contenant une anode ; un compartiment de cathode contenant une cathode ; et, disposée à l'intérieur dudit compartiment d'anode, à l'intérieur dudit compartiment de cathode, ou entre ledit compartiment d'anode et ledit compartiment de cathode, la suspension selon l'une quelconque des revendications 1 à 11.

14. Dispositif pour la détection d'un substrat utilisant une suspension selon l'une quelconque des revendications 1 à 11.

15. Procédé de production d'énergie électrique, comprenant l'utilisation de la suspension selon l'une quelconque des revendications 1 à 11.

16. Procédé pour préparer une suspension selon l'une quelconque des revendications 1 à 11, comprenant les étapes suivantes :
(a) préparer une solution aqueuse de bis (2,2'-bipyridine)ruthénium (II) bis (pyrazolyle) ;
(b) injecter une solution contenant du polystyrène-b-poly (L-isocyanoalanine (2-thiophén-3-yl-éthyl) amide) dans du THF dans la solution préparée dans l'étape (a).

17. Procédé selon la revendication 16, comprenant en outre :
(c) placer la dispersion préparée dans l'étape (b) à 60°C ;
(d) ramener la dispersion à la température ambiante ; et
(e) filtrer la dispersion de l'étape (d) au moyen d'un filtre ayant une séparation à 100 kDa.
